# EUROPEAN PATENT APPLICATION

(11) **EP 1 507 108 A1**
(43) Date of publication of application: **16.02.2005**
(21) Application number: 04018865.8
(22) Date of filing: 10.08.2004
(51) Int. Cl.: F16K 15/02

(54) **Valve**

(30) Priority: 15.08.2003 US 641556
(71) Applicant: TECUMSEH PRODUCTS COMPANY, Tecumseh Michigan 49286 (US)
(72) Inventor: Rado, Gordon E., Plymouth, Wisconsin 53073 (US)
(74) Representative: Pietruk, Claus Peter European Patent Attorney

(57) **Abstract**

A pressure regulating valve (10) which is responsive to pressure within a fluid system and operable to relieve pressure within the fluid system if same exceeds a predetermined pressure threshold, allowing the regulated pressure in the system to be held to a very accurate level. In particular, the valve (10) includes a valve body (30) having an inlet (40), an outlet (56), and a valve chamber which includes a recessed portion. A valve member (34) is movable within the valve chamber, and includes at least one first passage (76) in fluid communication with the inlet at least one second passage (80) in fluid communication with the outlet. The valve member (34) is movable within the valve body (30) responsive to fluid pressure between first and second positions. In the first position, at least one of the first and second passages (76, 80) is not aligned with the recessed portion, such that fluid cannot flow through the valve (10). In the second position, at least a portion of each of the first and second passages (76,80) is aligned with the recessed portion, such that fluid may flow from the inlet (40) to the outlet (56) through the first passage (76), the recessed portion (74), and the second passage (80).

## Description

### BACKGROUND OF THE INVENTION

### 1. Field of the Invention.

The present invention relates to by-pass pressure regulators for fluid systems, which prevent the fluid pressure within the fluid system from exceeding a desired predetermined level.

### 2. Description of the Related Art.

Many fluid systems include a closed or semi-closed fluid loop, in which a pump draws fluid from a fluid reservoir and supplies same to a desired location, followed by return of at least a portion of the fluid back to the fluid reservoir. Other, non-loop fluid systems include a pump which supplies fluid from a fluid source to a desired location where most or all of the fluid is used or consumed.

One example of a closed loop fluid system is a fuel injection system for an internal combustion engine. In this system, a pump draws a combustible fuel, such as gasoline, from a fuel tank and supplies the fuel under pressure to one or more fuel injectors which inject the fuel into the combustion chamber(s) of the engine. Typically, a pressure regulator is disposed between the pump and the fuel injectors, which opens to circulate fuel back to the fluid reservoir when fuel pressure exceeds a predetermined level. In this manner, fuel is supplied to the fuel injectors under a substantially constant pressure.

One example of a semi-closed fluid system is a lubrication system for an internal combustion engine, in which an oil pump draws oil from an oil sump within the engine crankcase, and forces same under pressure through suitable passages or galleries to lubrication points in the engine, thereby lubricating moving parts of the engine such as bearings or other contact surfaces. Thereafter, the oil may be directed back to the oil sump through suitable passages or galleries, or may drip by gravity back to the oil sump.

In many fluid systems such as those described above, it is desirable to maintain a relatively constant, controlled pressure in the fluid system to ensure an adequate flow or supply of fluid throughout the system, and also to prevent the pressure in the system from exceeding a level at which components within the system such as the pump could be damaged. Thus, by-pass pressure regulators are often provided in fluid systems, which are responsive to a predetermined pressure threshold within the fluid system to relieve excessive pressure by directing fluid back to the fluid reservoir, for example.

Typically, such pressure regulators are provided in the form of pressure-responsive valves including valve bodies having movable valve members therein. The valve members are typically slidably sealed within the valve bodies using O-rings, gaskets or other seals. Also, the valve members typically engage a valve seat of the valve body in an abutting manner when the valve is in a closed position to block fluid flow through the valve.

Problematically, O-rings, gaskets, or other seals between the valve member and valve body may wear out over time, possibly leading to leakage and thereby compromising effective operation of the valve. Similarly, the valve seats may also wear out or leak over time. Further, pressure regulating valves have been difficult to design and manufacture such that the valves quickly open responsive to a controlled, predetermined pressure threshold to thereby regulate the fluid pressure within the system at a precise, constant level.

Wheat is needed is a pressure regulating valve for fluid systems which is an improvement over the foregoing.

### SUMMARY OF THE INVENTION

The present invention provides a pressure regulating valve which is responsive to pressure within a fluid system and operable to relieve pressure within the fluid system if same exceeds a predetermined threshold, allowing the regulated pressure in the system to be held to a very accurate level. In particular, the present invention provides a valve including a valve body having an inlet, an outlet, and a valve chamber which includes an internal recessed portion. A valve member is movable within the valve chamber, and includes at least one first passage in fluid communication with the inlet and at least one second passage in fluid communication with the outlet. The valve member is movable within the valve body responsive to fluid pressure between first and second positions. In the first position, at least one of the first and second passages is not aligned with the recessed portion, such that fluid cannot flow through the valve. In the second position, at least a portion of each of the first and second passages are aligned with the recessed portion, such that fluid may flow from the inlet to the outlet through the first passage, the recessed portion, and the second passage.

The first passages of the valve member may be oriented at an angle with respect to the longitudinal axis of the valve. In this manner, the first passages have an elliptically-shaped interface with the internal wall of the valve member such that, upon movement of the valve member toward the second position, the first passages are brought into gradual communication with the recessed portion of the valve body to facilitate smoother and more accurate operation of the valve responsive to fluid pressure.

In addition, the valve member is biased to the first position by a spring disposed within the valve body, the spring including a substantially constant spring force through its compression range, such that the bias force of the spring which resists sliding movement of the valve member is substantially constant over the full range of travel of the valve member, allowing the regulated pressure to be held to an accurate level.

Also, the valve member includes a front portion facing the inlet of the valve body, having a cone-shaped recess from which the first passages extend, thereby presenting an increased surface area to fluid at the valve inlet such that movement of the valve is closely responsive to fluid pressure.

Advantageously, the present pressure regulating valve does not include an O-ring, gasket, or other similar sealing members between the valve member and valve body, which sealing members may become prone to fatigue over time, causing leakage and inefficient operation of the valve. In addition, the present pressure regulating valve does not include a valve seat in which the valve member abuts the valve body to block fluid flow through the valve, which valve seats may wear or leak over time and compromise the efficiency of operation of the valve.

In one form thereof, the present invention provides a valve, including a valve body having an inlet, an outlet, and an internal recess; a valve member including at least one first passage in fluid communication with the inlet and at least one second passage in fluid communication with the outlet, the valve member movable within the valve body between a first position in which at least one of the first and second passages is not aligned with the recess such that fluid cannot flow from the inlet to the outlet, and a second position in which each of the first and second passages is aligned with the recess, such that fluid may flow from the inlet to the outlet through the first passage, the recess, and the second passage.

In another form thereof, the present invention provides a valve, including a valve body including an inlet and an outlet, the valve body having a valve chamber therein with a recessed portion; a valve member sealingly movable within the valve chamber, the valve member including at least one first passage in fluid communication with the inlet and at least one second passage in fluid communication with the outlet; a biasing member disposed within the valve chamber and biasing the valve member to a first position in which at least one of the first and second passages is not aligned with the recessed portion, the valve member movable against the bias force of the biasing member responsive to fluid pressure at the inlet to a second position in which each of the first and second passages is aligned with the recessed portion, whereby when the valve member is in the first position, fluid cannot flow from the inlet to the outlet, and when the valve member is in the second position, fluid may flow from the inlet to the outlet through the first passage, the recessed portion, and the second passage.

In a further form thereof, the present invention provides a valve, including a valve body including an inlet and an outlet, the valve body further including a longitudinal bore therein having an internal annular groove; a valve member sealingly movable within the bore, the valve member including at least one first passage in fluid communication with the inlet and angularly disposed with respect to the bore, and at least one second passage in fluid communication with the outlet; a biasing member disposed within the bore and biasing the valve member to a first position in which at least one of the first and second passages is not aligned with the annular groove such that fluid cannot flow from the inlet to the outlet, the valve member movable against the bias force of the biasing member responsive to fluid pressure at the inlet to a second position in which each of the first and second passages is aligned with the annular groove and fluid may flow from the inlet to the outlet through the first passage, the recessed portion, and the second passage.

### BRIEF DESCRIPTION OF THE DRAWINGS

The above-mentioned and other features and advantages of this invention, and the manner of attaining them, will become more apparent and the invention itself will be better understood by reference to the following description of an embodiment of the invention taken in conjunction with the accompanying drawings, wherein:

Fig. 1 is schematic diagram showing an exemplary fluid system, the fluid system including a pressure regulating valve in accordance with the present invention;

Fig. 2 is a perspective view of the pressure regulating valve of Fig. 1;

Fig. 3 is a sectional view taken along line 3-3 of Fig. 2, showing the valve member in a first or closed position;

Fig. 4 is a sectional view taken along line 3-3 of Fig. 2, showing the valve member in a second or open position;

Fig. 5 is an exploded, sectional view of the valve; and

Fig. 6 is a perspective view of the valve member.

Corresponding reference characters indicate corresponding parts throughout the several views. The exemplification set out herein illustrates one preferred embodiment of the invention, in one form, and such exemplification is not to be construed as limiting the scope of the invention any manner.

### DETAILED DESCRIPTION

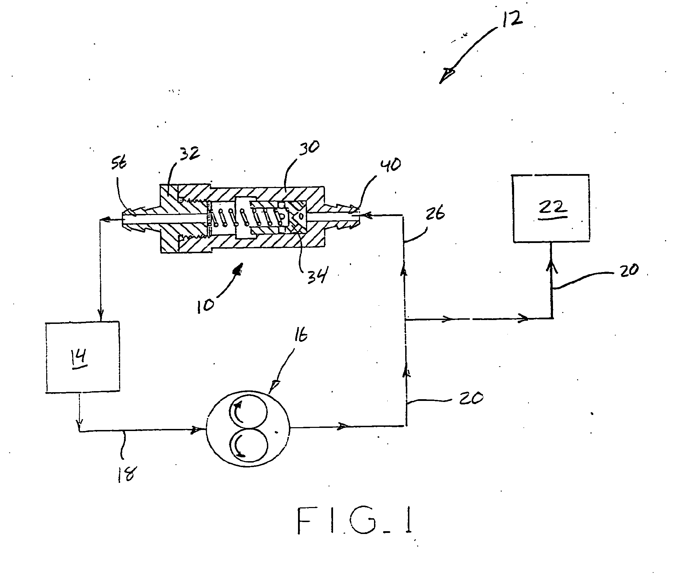

Referring to Fig. 1, an exemplary fluid system is shown, which includes a pressure regulating valve 10 in accordance with the present invention. In particular, the fluid system is exemplified herein as fuel injection system 12 for an internal combustion engine.
Although pressure regulating valve 10 is described herein with reference to fuel injection system 12 which includes fuel as the working fluid, one of ordinary skill in the art will appreciate that the pressure regulating valve 12 of the present invention may be used with any type of fluid system which includes a pressure-responsive valve to regulate the pressure of a working fluid therein.

In Fig. 1, fuel injection system 12 includes fluid reservoir 14, such as a gas tank, which contains a supply of combustible fuel such as gasoline. Pump 16 draws fuel from reservoir 14 through line 18. Pump 16 may be a gerotor pump, reciprocating pump, peristaltic pump, or another type of fluid pump. Pump 16 supplies fuel under pressure through supply line 20 to a suitable destination, such as one or more fuel injectors 22 of an internal combustion engine (not shown). Each fuel injector 22 injects at least a portion of the fuel which is supplied thereto to the combustion chamber of the engine at regular intervals according the operating cycle of the engine. As described below, any fuel which is not injected through fuel injector(s) 22 is carried back to reservoir 14 through bypass line 26, which fluidly communicates supply line 20 with reservoir 14. Bypass line 26 includes pressure regulating valve 10 therein in accordance with the present invention. Optionally, in applications in which excess fuel is supplied to fuel injector(s) 22, a return line (not shown) may communicate unused fuel from injector(s) back to reservoir 14.

In fuel injection system 12, pump 16 supplies fuel from reservoir 14 through supply line 20 to fuel injector(s) 22 under pressure. It is desired that the fuel pressure within system 12 not exceed a desired level, such that the amount of fuel which is injected into a respective combustion chamber of the engine through each fuel injector 22 may be determined by the duration of opening of each fuel injector 22. Valve 10, as described in further detail below, operates to relieve pressure within fuel injection system 12 when same exceeds a predetermined level in order to prevent the supply of fuel to fuel injector(s) 22 at a higher pressure than desired, and also to prevent potential damage to components of system 12, such as pump 16 or fuel injector(s) 22.

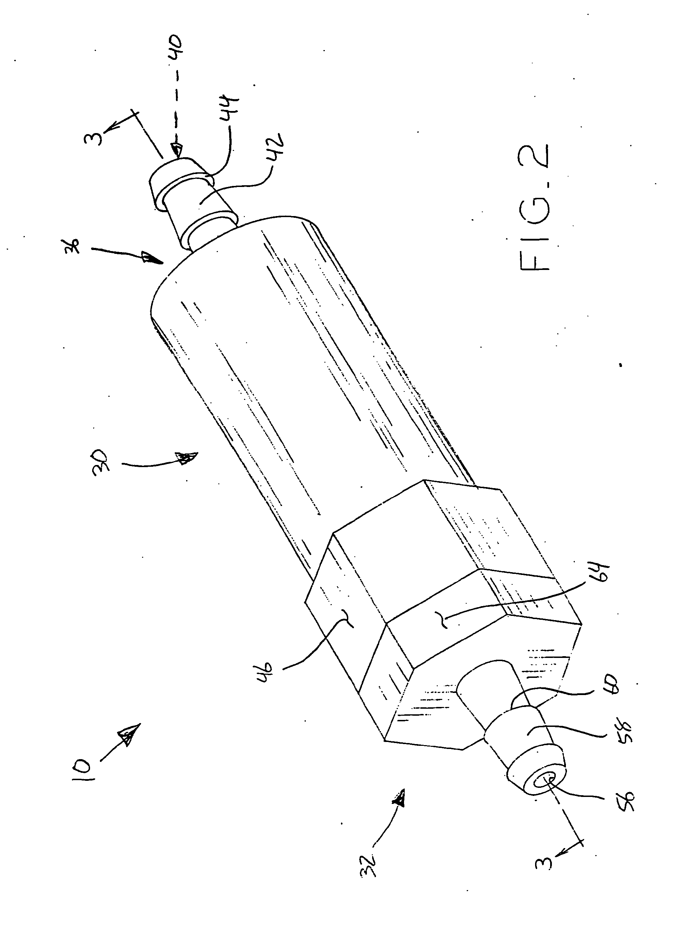

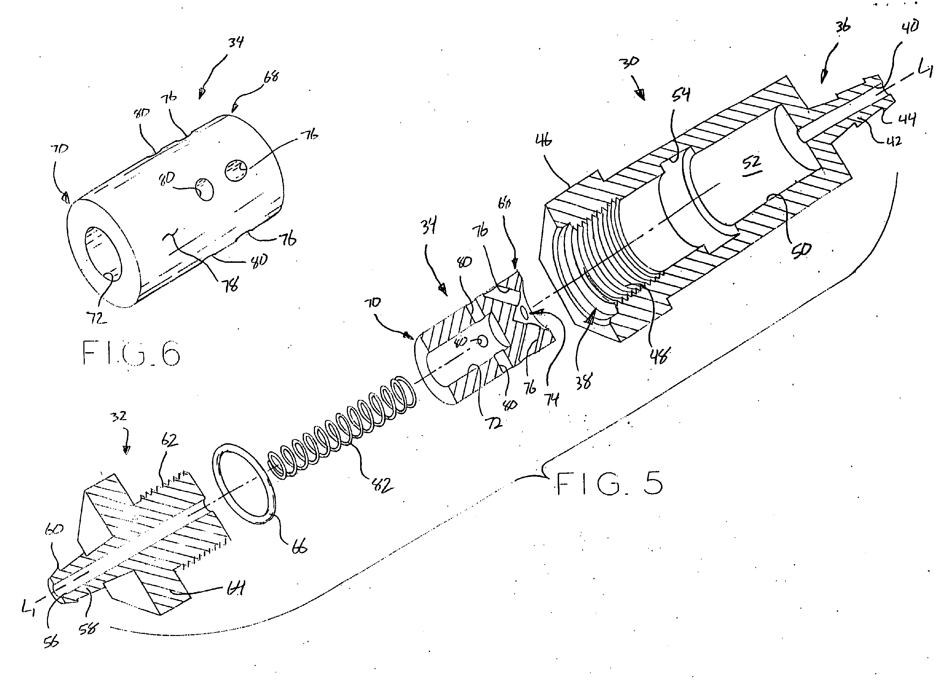

Referring to Figs. 2-5, valve 10 generally includes valve body 30, cap 32, and valve member 34 slidably disposed within valve body 30 along the longitudinal axis L₁-L₁ of valve 10. Valve body 30 is generally cylindrically-shaped, and includes inlet end 36 and open end 38 (Fig. 5). Inlet end 36 includes a bore defining inlet 40, and also includes inlet fitting 42 projecting therefrom, having a plurality of barbs 44 for securing a fluid conduit thereto, such as bypass line 26. Additionally, valve body 30 includes tool fitting 46 near open end 38 thereof. Tool fitting 46 is shown herein as having a hexagonal shape, however, the shape of tool fitting 46 may vary as desired. Open end 38 of valve body 30 includes internal threads 48. Valve body 30 also includes bore 50 therethrough, which is defined along longitudinal axis L₁-L₁ of valve 10 and, when cap 32 is secured to valve body 30, defines a valve chamber in which valve member 34 is slidably disposed. Bore 50 includes an interior surface 52 having a first diameter. Recessed portion 54 is defined within valve body 30, and is shown herein as an internal annular groove having a diameter greater than bore 50.

Cap 32 includes a bore therethrough defining outlet 56, and further includes outlet fitting 58 projecting therefrom, which includes a plurality of barbs 60 for securing a fluid conduit thereto, such as bypass line 26. Cap 32 also includes external threads 62 engagable with internal threads 48 of valve body 30 to secure cap 32 within open end 38 of valve body 30. Cap 32 includes tool fitting 64, shown as having a hexagonal shape, which may be grasped by a suitable tool. To attach cap 32 to valve body 30, tool fittings 64 and 46 thereof, respectively, may be grasped by suitable tools to thread cap 32 within open end 38 of valve body 30. O-ring 66 is provided between cap 32 and valve body 30 to seal the connection therebetween.

Valve member 34 generally includes front portion 68 and rear portion 70. A bore 72 is formed centrally within valve member 34 as a blind hole extending from rear portion 70 toward front portion 68 of valve member 34 along longitudinal axis L₁-L₁ of valve 10. Front portion 68 of valve member 34 includes a cone-shaped recess 74 therein, which faces inlet 40 of valve body 30. Valve member 34 is closely received within bore 50 of valve body 30 with exterior surface 78 (Fig. 6) of valve member 34 in sliding contact with interior surface 52 of bore 50, such that fluid may not pass therebetween.

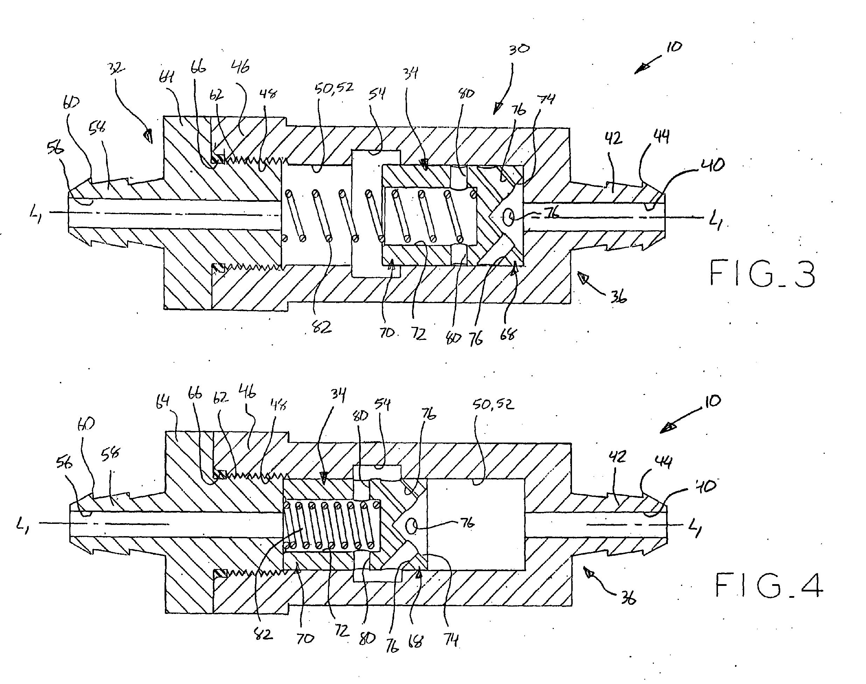

A plurality of first passages 76 extend through valve member 34 from recess 74 to exterior surface 78 of valve member 34 and, as shown in Figs. 3-5, first passages 76 are disposed at an angle with respect to longitudinal axis L₁-L₁ of valve 10. Specifically, first passages 76 are disposed at a 45° angle with respect to longitudinal axis L₁-L₁, although such angle may vary as desired. Referring additionally to Fig. 6, it may be seen that, because first passages 76 are disposed at an angle with respect to longitudinal axis L₁-L₁ of valve body 30, the ends of first passages 76 at exterior surface 78 of valve member 34 are elliptically shaped.

Valve member 34 additionally includes a plurality of second passages 80 extending through valve member 34 between exterior surface 78 and bore 72 of valve member 34. Second passages 80 are shown herein extending radially from bore 72, wherein second passages 80 are perpendicular to longitudinal axis L₁-L₁ of valve 10. However, similar to first passages 76, second passages may optionally extend at an angle with respect to longitudinal axis L₁-L₁ of valve 10. As shown in Fig. 6, respective pairs of first and second passages 76 and 80 are longitudinally aligned with respect to one another along longitudinal axis L₁-L₁; however, first and second passages 76 and 80 may optionally be radially staggered about exterior surface 78 of valve member 34.

Spring 82 is captured within valve 10, with first end 84 thereof in abutment with cap 32, and second end 86 thereof extending within bore 72 of valve member 34 and abutting the blind end of bore 72. As shown in Fig. 3, spring 82 normally biases valve member 34 to a first or closed position in which front portion 68 of valve member 34 engages valve body 30 near inlet 40 of valve body 30. Spring 82 includes a substantially constant spring force throughout its compression range, such that the bias force of spring 82 which resists sliding movement of valve member 34 within valve body 30 is substantially constant over the full range of travel of valve member 34 within valve body 30.

In operation, spring 82 normally biases valve member 34 to the first position shown in Fig. 3. In this position, and referring additionally to Fig. 1, fuel within fuel injection system 12 enters inlet 40 of valve body 30 and may enter cone-shaped recess 74 in front portion 68 of valve member 34 as well as first passages 76. At normal pressures within fuel injection system 12, the fuel pressure at inlet 40 of valve 10 is insufficient to overcome the bias force of spring 82, such that valve member 34 held in the first or closed position shown in Fig. 3. In this position, fuel cannot pass through valve 10 and bypass line 26 to reservoir 14. Specifically, passage of fuel through first passages 76 of valve member 34 is blocked by interior surface 52 of valve body 30, such that first passages 76 cannot fluidly communicate with second passages 80 of valve member 34.

When the fuel pressure in fuel injection system 12 exceeds a predetermined level, the pressure of the fuel at inlet 40 of valve 10 overcomes the bias force of spring 82, such that valve member 34 moves from the first position shown in Fig. 3 toward a second or open position, shown in Fig. 4. In the second position, at least a portion each of the first and second passages 76 and 80 are aligned with recessed portion 54 of valve body 30 to thereby allow passage of fuel successively through inlet 40 of valve body 30, first passages 76 of valve member 34, recessed portion 54 of valve body 30, second passages 80 of valve member 34, central bore 72 of valve member 34, and outlet 56 in cap 32, whereby fuel may flow through valve 10 and the bypass line 26 back to reservoir 14.

When the fuel pressure subsequently drops in fuel injection system 12 below the predetermined level, the bias force of spring 82 moves valve member 34 back toward the first position of Fig. 3 such that fuel flow through valve 10 is prevented.

Notably, depending upon the fuel pressure in system 12, valve member 34 may move against the bias of spring 82 in response to fuel pressure only a portion of the distance between the first and second.positions shown in Figs. 3 and 4, wherein only a portion of each of first and second passages 76 and 80 are aligned with recessed portion 54. In this manner, a reduced amount of fuel is allowed to pass through valve 10 than the amount which would otherwise pass through valve 10 if valve member 34 is moved to the fully open position of Fig. 4. Notably therefore, the degree of travel of valve member 34, and the corresponding amount of fuel which is allowed to pass through valve 10, is proportionally dependent upon the fuel pressure in system 12, such that valve 10 may selectively regulate the fuel pressure in system 12 to ensure that the fuel pressure supplied to fuel injector(s) 22 does not exceed a desired level.

Advantageously, cone-shaped recess 74 of valve member 34 presents a larger surface area to the fuel at inlet 40 of valve 10 than would be presented, for example, if valve member 34 included a planar front surface perpendicular to the longitudinal axis L₁-L₁ of valve 10.
This increased surface area allows for greater area contact between the fuel at inlet 40 and valve member 34, thereby facilitating more accurate and controlled movement of valve member 34 responsive to fuel pressure.

Additionally, the elliptically-shaped profile of the ends of first passages 76 at exterior surface 78 of valve member 34 allows first passages 76 to fluidly communicate with recessed portion 54 of valve member 34 and second passages 80 earlier in the travel range of valve member 34 towards the second position than if first passages 76 were disposed perpendicular to longitudinal axis L₁-L₁ of valve 10 and had a circular-shaped profile at the ends thereof.
The foregoing also provides a more gradual increase in fuel flow through valve 10 responsive to fuel pressure, resulting in more efficient operation of valve 10.

Further, valve 10 does not include an O-ring, gasket, or other similar type of sealing member between valve member 34 and valve body 30, thereby obviating such components which in known valve designs, may wear out or leak over time: Also, the above-described manner in which fuel passes through valve 10 obviates the need for an abutment-type valve seat between valve member 34 and valve body 30 to block fuel flow, as is present in known valve designs and which may be prone to wear and leakage.

While this invention has been described as having a preferred design, the present invention can be further modified within the spirit and scope of this disclosure. This application is therefore intended to cover any variations, uses, or adaptations of the invention using its general principles. Further, this application is intended to cover such departures from the present disclosure as come within known or customary practice in the art to which this invention pertains and which fall within the limits of the appended claims.

## Claims

1. A valve (10) including a valve body (30) having an inlet (40) and an outlet (56), **characterized by** an internal recess (54) and a valve member (34) including at least one first passage (76) in fluid communication with said inlet and at least one second passage (80) in fluid communication with said outlet, said valve member movable within said valve body between a first position in which at least one of said first and second passages is not aligned with said recess such that fluid cannot flow from said inlet to said outlet, and a second position in which each of said first and second passages is aligned with said recess, such that fluid may flow from said inlet to said outlet through said first passage, said recess, and said second passage.

2. The valve (10) of Claim 1, **characterized by** a biasing member (82) disposed within said valve body (30) and biasing said valve member (34) to said first position, said valve member movable against the bias force of said biasing member to said second position responsive to fluid pressure at said inlet (40).

3. The valve (10) of Claim 2, **characterized in that** said biasing member (82) is a compression spring, said spring having a substantially uniform spring force throughout its compression range.

4. The valve (10) of any of Claims 1-3, **characterized in that** said valve body (30) includes a circular bore (50) having a diameter, said valve member (34) movable within said circular bore.

5. The valve (10) of Claim 4, **characterized in that** said recess (54) is an internal annular groove within said valve body (30), said groove having a diameter greater than said bore diameter.

6. The valve (10) of any of the preceding Claims, **characterized in that** said valve member (34) includes a plurality of said first passages (76) and a plurality of said second passages (80).

7. The valve (10) of any of the preceding Claims, **characterized in that** each of said first passages (76) is angularly disposed with respect to a longitudinal axis (L₁-L₁) of said valve body (30).

8. The valve (10) of any of the preceding Claims, **characterized in that** each of said second passages (80) is transversely disposed with respect to a longitudinal axis (L₁-L₁) of said valve body (30).

9. The valve (10) of any of the preceding Claims, **characterized in that** said valve member (34) includes a front portion (68) facing said inlet (40), said front portion including a cone-shaped recess (74) from which said first passages (76) extend.
